(19) Europäisches Patentamt
European Patent Office
Office européen des brevets

(11) **EP 2 810 958 B1**

(12) **EUROPEAN PATENT SPECIFICATION**

(45) Date of publication and mention
of the grant of the patent:
**30.11.2016 Bulletin 2016/48**

(51) Int Cl.:
*C08F 2/26* (2006.01)    *C08F 6/22* (2006.01)
*C08J 3/16* (2006.01)    *C08F 2/24* (2006.01)

(21) Application number: **13743739.8**

(22) Date of filing: **30.01.2013**

(86) International application number:
**PCT/JP2013/052108**

(87) International publication number:
**WO 2013/115278 (08.08.2013 Gazette 2013/32)**

(54) **METHOD FOR PRODUCING POLYTETRAFLUOROETHYLENE FINE POWDER**

VERFAHREN ZUR HERSTELLUNG EINES FEINEN POLYTETRAFLUORETHYLENPULVERS

PROCÉDÉ DE PRODUCTION DE FINE POUDRE DE POLYTÉTRAFLUOROÉTHYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.02.2012 JP 2012020530**

(43) Date of publication of application:
**10.12.2014 Bulletin 2014/50**

(73) Proprietor: **Asahi Glass Company, Limited Tokyo 100-8405 (JP)**

(72) Inventors:
• **HIGUCHI, Shinya**
  **Tokyo 100-8405 (JP)**
• **KOBAYASHI, Shigeki**
  **Tokyo 100-8405 (JP)**
• **NAGAI, Hiroki**
  **Tokyo 100-8405 (JP)**

(74) Representative: **Müller-Boré & Partner Patentanwälte PartG mbB Friedenheimer Brücke 21 80639 München (DE)**

(56) References cited:
**WO-A1-2006/095657    WO-A1-2009/142080
JP-A- H05 186 605    JP-A- 2010 037 365
US-B1- 6 268 469**

**Description**

TECHNICAL FIELD

The present invention relates to a process for producing a polytetrafluoroethylene fine powder.

BACKGROUND ART

Tetrafluoroethylene (hereinafter referred to as "TFE") is emulsion-polymerized in the presence of water, a polymerization initiator, a fluorinated emulsifier, etc., to obtain a PTFE emulsion having fine particles of polytetrafluoroethylene (hereinafter referred to as "PTFE") dispersed in an aqueous medium. This PTFE emulsion is coagulated and stirred to separate a wet-state polytetrafluoroethylene fine powder from the aqueous medium, and the obtained wet-state fine powder is dried to produce a PTFE fine powder. The PTFE fine powder is likely to be readily fibrilized when a shearing force is exerted thereto, and therefore, it may be molded by a special method and used for various applications.

As one of methods for molding a PTFE fine powder, there is paste extrusion molding. In the paste extrusion molding, a lubricant such as naphtha or a petroleum-type hydrocarbon having a dry point of at least 100°C is added and homogeneously impregnated to the PTFE fine powder to obtain a mixture. Then, in order not to let the PTFE fine powder fibrilize, the mixture is preliminarily molded into a prescribed shape such as a cylinder shape to obtain a preliminarily molded product. At the time of preparing this preliminarily molded product, the higher the packing rate of the PTFE fine powder in the mold, i.e. the higher the bulk density of the PTFE fine powder, the higher the productivity. Therefore, a PTFE fine powder having a high bulk density is desired. This preliminarily molded product is charged in an extrusion cylinder and extruded by a ram for plastic deformation to obtain an extrusion molded product. Thereafter, the extrusion molded product is heated in a drying furnace to remove the lubricant and then sintered in the heating furnace to obtain a desired molded product. Otherwise, the extrusion molded product may be rolled through rolls before removing the lubricant, to obtain a sheet or a film. Further, from the sheet or the film, the lubricant is removed, followed by stretching at a low stretching ratio to obtain a non-sintered raw tape. Further, by mono-axially or bi-axially stretching this raw tape in a heated state at a high speed and at a high ratio, it is possible to obtain a high strength porous film or sheet.

In the emulsion polymerization of TFE, as a fluorinated emulsifier, ammonium perfluorooctanoate (structural formula: $CF_3(CF_2)_6COONH_4$, hereinafter referred to also as "APFO") having 8 carbon atoms wherein the main chain is composed solely of carbon atoms, is commonly used.

However, APFO is not present in the natural world and is a hardly decomposable substance, and further, it has been pointed out that its biological accumulation property is high, and it has been proposed to suppress its discharge from the environmental viewpoint.

For example, Patent Documents 1 to 4 have proposed a technique for emulsion polymerization of TFE by using, as a fluorinated emulsifier, a fluorinated carboxylic acid or its salt, having the hydrophilicity increased more than APFO by introducing an etheric oxygen atom in its chain portion.

PRIOR ART DOCUMENTS

PATENT DOCUMENTS

Patent Document 1: WO2005/042593
Patent Document 2: U.S. Patent Application Publication No. 2007/00142541
Patent Document 3: U.S. Patent Application Publication No. 2008/0269408
Patent Document 4: JP-A-2010-37365

DISCLOSURE OF INVENTION

TECHNICAL PROBLEM

However, the fluorinated emulsifier having the hydrophilicity increased by introducing an etheric oxygen atom in its chain portion, has a lower emulsifying property than APFO. Therefore, in order to let the emulsion polymerization of TFE proceed stably to obtain PTFE having a high molecular weight, it was required to use the fluorinated emulsifier in a larger amount than in the case of APFO.

In the PTFE emulsion produced by using the fluorinated emulsifier in a large amount, the fluorinated emulsifier was present in a large amount, whereby part of primary particles of PTFE would not be coagulated at the time of coagulation and stirring. Accordingly, the concentration of non-coagulated PTFE in the coagulation wastewater tended to be high, and there was a problem such that the yield of the PTFE fine powder tended to be low. Coagulation proceeds as primary particles of PTFE are hydrophobized while being associated with one another. At that time, if the fluorinated emulsifier is present in a large amount in the PTFE emulsion, primary particles of PTFE tend to be hardly densely associated and coagulated, whereby the bulk density of the obtainable PTFE fine powder tends to be low. Further, as the concentration of non-coagulated PTFE in the coagulation wastewater tended to be high, a trouble such as clogging of pipe lines for treating the wastewater was likely to occur.

As a method for solving such problems, a method was available to carry out the coagulation and stirring after lowering the PTFE concentration in the PTFE emulsion. However, in such a method, the coagulation batch yield tended to be low, and further, the coagulation time tended to be long, whereby the productivity tended to be low. Further, if the PTFE concentration is low, primary particles of PTFE tend to be hardly densely associated and coagulated, whereby the bulk density of the obtainable PTFE fine powder tends to be low.

A method of introducing a polyvalent metal such as calcium, magnesium or aluminum, as a coagulant, at the time of coagulation and stirring of the PTFE emulsion, is also effective. However, such a polyvalent metal is likely to remain in the PTFE fine powder and thus is likely to be an impurity in the final product.

There is also a method of using, as the coagulant, a nitrogen compound which may be vaporized or decomposed at a relatively low temperature, such as nitric acid or its salt, ammonium carbonate or ammonium hydrogencarbonate. However, eutrophication of rivers and ocean due to discharge of the nitrogen compound is worried, and in consideration of nitrogen discharge regulations, labor and costs are required for the wastewater treatment, and further, the total production is rather limited.

It is an object of the present invention to provide a process for producing a PTFE fine powder having a high bulk density, whereby the concentration of non-coagulated PTFE in coagulation wastewater is low at the time of producing a PTFE fine powder by coagulating and stirring a PTFE emulsion produced by means of a fluorinated emulsifier having a low biological accumulation property.

SOLUTION TO PROBLEM

The present invention provides a process for producing a PTFE fine powder as described in [1] to [9] having the following constructions.

[1] A process for producing a PTFE fine powder, which comprises

emulsion-polymerizing TFE in the presence of an aqueous medium, at least one fluorinated emulsifier selected from the group consisting of a $C_{4-7}$ fluorinated carboxylic acid having from 1 to 4 etheric oxygen atoms in its main chain, and its salts, and a radical polymerization initiator, to produce a PTFE emulsion,
adjusting the obtained PTFE emulsion to a PTFE concentration of from 10 to 25 mass%, followed by coagulation and stirring at a coagulation temperature of from 5 to 18°C to separate a wet-state PTFE fine powder, and drying the obtained wet-state PTFE fine powder to produce a PTFE fine powder.

[2] The process for producing a PTFE fine powder according to [1], wherein the coagulation and stirring of the PTFE emulsion is carried out without using a coagulant.

[3] The process for producing a PTFE fine powder according to [1] or [2], wherein the bulk density of the PTFE fine powder is at least 500 g/L.

[4] The process for producing a PTFE fine powder according to any one of [1] to [3], wherein the standard specific gravity of the PTFE fine powder is from 2.135 to 2.220.

[5] The process for producing a PTFE fine powder according to any one of [1] to [4], wherein the emulsion polymerization of TFE is conducted under emulsion polymerization conditions of a polymerization temperature of from 10 to 95°C, a polymerization pressure of from 0.5 to 4.0 MPa and a polymerization time of from 90 to 520 min., to produce the PTFE emulsion.

[6] The process for producing a PTFE fine powder according to any one of [1] to [5], wherein the concentration of non-coagulated PTFE in coagulation wastewater having the wet-state PTFE fine powder separated by the coagulation and stirring, is less than 0.4 mass%.

[7] The process for producing a PTFE fine powder according to any one of [1] to [6], wherein the fluorinated emulsifier is $CF_3O(CF_2)_3OCHFCF_2COONH_4$, $CF_3OCF(CF_3)CF_2OCF(CF_3)COONH_4$, $C_3F_7OCF(CF_3)COONH_4$ or $C_2F_5OCF_2CF_2OCF_2 COONH_4$.

[8] The process for producing a PTFE fine powder according to any one of [1] to [7], wherein the amount of the fluorinated emulsifier used, is from 1,500 to 20,000 ppm to the yield of PTFE.

[9] The process for producing a PTFE fine powder according to any one of [1] to [8], wherein the drying of the wet-state PTFE fine powder is carried out in an atmosphere containing ammonia.

ADVANTAGEOUS EFFECTS OF INVENTION

According to the present invention, a PTFE emulsion having a PTFE concentration of from 10 to 25 mass% is coagulated and stirred at a coagulation temperature of from 5 to 18°C, whereby primary particles of PTFE are densely associated and coagulated, and a PTFE fine powder having a high bulk density is obtainable. Further, as the coagulation is conducted at a low temperature, the surface active property of the fluorinated emulsifier contained in the PTFE emulsion tends to be low, whereby coagulation of primary particles of PTFE will be facilitated, and the concentration of non-coagulated PTFE in the coagulation wastewater will be low. Thus, according to the present invention, it is possible to reduce the labor and costs required for wastewater treatment, and it is possible to produce a PTFE fine powder having a high bulk density with good productivity.

DESCRIPTION OF EMBODIMENTS

The process for producing a PTFE fine powder of the present invention comprises the following steps 1 to 3.

Step 1: a step of emulsion-polymerizing TFE to produce a PTFE emulsion
Step 2: a step of coagulating and stirring the PTFE emulsion to separate a wet-state PTFE fine powder from the aqueous medium
Step 3: a step of drying the wet-state PTFE fine powder

Now, the respective steps will be described in detail.

In step 1, TFE is emulsion-polymerized in the presence of an aqueous medium, at least one fluorinated emulsifier selected from the group consisting of a $C_{4-7}$ fluorinated carboxylic acid having from 1 to 4 etheric oxygen atoms in its main chain, and its salts, and a radical polymerization initiator, to produce a PTFE emulsion.

As the aqueous medium to be used for the production of the PTFE emulsion, water or water containing a water-soluble organic solvent is preferred, and water is more preferred.

As the radical polymerization initiator to be used for the production of the PTFE emulsion, a water-soluble radical polymerization initiator, a water-soluble redox catalyst, an oil-soluble radical polymerization initiator, etc., may be mentioned. A water-soluble radical polymerization initiator or a water-soluble redox catalyst is preferred.

As the water-soluble radical polymerization initiator, a persulfate such as ammonium persulfate or potassium persulfate, or a water-soluble organic peroxide such as disuccinic acid peroxide, bis glutaric acid peroxide or tert-butyl hydroperoxide, is preferred.

As the water-soluble redox catalyst, preferred is a combination of an oxidizing agent such as bromic acid or its salt, chloric acid or its salt, persulfuric acid or its salt, permanganic acid or its salt, or hydrogen peroxide, and a reducing agent such as sulfurous acid or its salt, hydrogen sulfurous acid or its salt, thiosulfuric acid or its salt, or an organic acid.

As the radical polymerization initiator, one type may be used alone, or two or more types may be used in combination. As the radical polymerization initiator, disuccinic acid peroxide is more preferred.

The amount of the radical polymerization initiator to be used, is preferably from 0.01 to 0.20 mass%, more preferably from 0.01 to 0.15 mass%, to the final yield of PTFE.

The fluorinated emulsifier is commonly used in the emulsion polymerization of TFE, since it is free from preventing the polymerization reaction of TFE by chain transfer in an aqueous medium. The fluorinated emulsifier in the present invention is at least one fluorinated emulsifier selected from the group consisting of a $C_{4-7}$ fluorinated carboxylic acid having from 1 to 4 etheric oxygen atoms in its main chain, and its salts. Such a fluorinated emulsifier has etheric oxygen and a low molecular weight and is therefore considered to have a low residual nature and a low accumulation property in vivo.

Specific examples of the fluorinated emulsifier include $C_3F_7OCF(CF_3)CF_2OCHFCOOH$, $C_3F_7OCF_2CF_2OCF_2COOH$, $CF_3OCF_2OCF_2OCF_2COOH$, $CF_3O(CF_2)_3OCH(CF3)COOH$, $CF_3OCF(CF_3)CF_2OCF(CF_3)COOH$, $CF_3O(CF_2)_3OCHFCF_2COOH$, $C_4F_9OCF(CF_3)COOH$, $C_4F_9OCF_2CF_2COOH$, $CF_3O(CF_2)_3OCF_2COOH$, $C_2F_5OCF_2CF_2OCF_2COOH$, $CF_3OCF_2CF_2OCF_2CF_2COOH$, $CF_3O(CF_2)_2CF_2COOH$, $CF_3O(CF_2)_3OCHFCOOH$, $CF_3OCF_2OCF_2OCF_2COOH$, $C_4F_9OCF_2COOH$, $C_3F_7OCF_2CF_2COOH$, $C_3F_7OCF(CF_3)COOH$, $C_3F_7OCHFCF_2COOH$, $CF_3CHFO(CF_2)_3COOH$, $CF_3OCF_2CF_2CF_2OCF_2COOH$, $C_2F_5OCF_2CF_2COOH$, $C_3F_7OCHFCOOH$, and their salts with Li, Na, K, $NH_4$, etc. Particularly preferred are ammonium salts ($NH_4$). An ammonium salt is excellent in the solubility in an aqueous medium and is free from such a possibility that a metal ion component will remain as an impurity in the PTFE fine powder or in the final product. Among them, $CF_3O$ $(CF_2)_3OCHFCF_2COONH_4$, $CF_3OCF(CF_3)CF_2OCF(CF_3)COONH_4$, $C_3F_7OCF(CF_3)COONH_4$, or $C_2F_5OCF_2CF_2OCF_2COONH_4$ is particularly preferred.

The amount of the fluorinated emulsifier to be used is preferably from 1,500 to 20,000 ppm, more preferably from 2,000 to 20,000 ppm, most preferably from 2,000 to 15,000 ppm, to the final yield of PTFE. If the amount is less than this range, the stability of the PTFE emulsion may not be maintained. If it is larger than this range, the association degree of the primary particles of PTFE tends to be low at the time of coagulating and stirring the PTFE emulsion, and it tends to be difficult to obtain a PTFE fine powder having a high bulk density.

For the emulsion polymerization of TFE, a stabilizing assistant may further be added in addition to the above raw materials.

The stabilizing assistant is preferably one which has a hydrophobicity and which will be completely separated from the PTFE emulsion after the emulsion polymerization of TFE so that it will not be a contaminanating component. Specifically, a paraffin wax, a fluorinated oil, a fluorinated solvent or a silicone oil may, for example, be preferred. As the stabilizing assistant, one type may be used alone, or two or more types may be used in combination. As the stabilizing assistant, a paraffin wax is more preferred. The paraffin wax is a mixture of hydrocarbons having molecular weights of from 300 to 500, which contains linear paraffin type hydrocarbons (normal paraffin) having from 20 to 30 carbon atoms as the main components. The melting point of the paraffin wax is preferably from 40 to 65°C, more preferably from 50 to 65°C. The amount of the stabilizing assistant is preferably from 0.1 to 12 mass%, more preferably from 0.1 to 8 mass%, based on the mass of the aqueous medium to be used.

In the present invention, as PTFE, a homopolymer of TFE and a copolymer of TFE and its comonomer (hereinafter referred to as modified PTFE), which is obtained by copolymerizing TFE and another monomer (hereinafter referred to as a comonomer) copolymerizable with TFE within a range not to impart melt-moldability to PTFE, may be mentioned. In modified PTFE, the center nuclei of emulsified particles of PTFE or outer shell portions thereof are modified with the comonomer, whereby it is excellent in paste extrusion properties at a high size-reduction ratio and exhibits excellent properties in applications for ultrafine tubes or electric wire coatings, or tubes, pipes having rigidity imparted, etc.. The content of structural units derived from the comonomer in modified PTFE is preferably at most 0.5 mass%, more preferably at most 0.4 mass%, based on all structural units. If it exceeds 0.5 mass%, melting properties tend to be imparted to PTFE, whereby such PTFE may be not suitable for heat resistant applications.

The comonomer to be used for the production of modified PTFE may, for example, be hexafluoropropylene, a perfluoro(alkyl vinyl ether), chlorotrifluoroethylene, a (perfluoroalkyl)ethylene, vinylidene fluoride, vinyl fluoride, a perfluoro(alkenyl vinyl ether), perfluoro(2,2-dimethyl-1,3-dioxole) or a perfluoro(4-alkoxy-1,3-dioxole). As the comonomer, one type may be used alone, or two or more types may be used in combination.

The perfluoro(alkyl vinyl ether) may, for example, be perfluoro(methyl vinyl ether), perfluoro(ethyl vinyl ether), perfluoro(propyl vinyl ether), perfluoro(butyl vinyl ether), perfluoro(ethoxyethyl vinyl ether), perfluoro(propoxypropyl vinyl ether) or perfluoro(tetrahydrofurylmethyl vinyl ether).

The perfluoro(alkenyl vinyl ether) may, for example, be perfluoro(allyl vinyl ether) or perfluoro(butenyl vinyl ether).

Further, in the present invention, as the above comonomer, a (polyfluoroalkyl)ethylene (a) represented by the following formula (1), and/or a comonomer (b) having a monomer reactivity ratio $r_{TFE}$ of from 0.1 to 8 in copolymerization with TFE (hereinafter the (polyfluoroalkyl)ethylene (a) and the comonomer (b) may be referred to generally as "the highly reactive comonomer") may be used. By adding a very small amount of the highly reactive comonomer at the beginning of the emulsion polymerization of TEF, it is possible to produce a PTFE emulsion having high molecular weight PTFE particles dispersed therein, whereby even if a fluorinated emulsifier having a low surface active performance is used, the stability of the PTFE emulsion is suitably high to such an extent not to present an adverse influence to processability, etc., and it is possible to obtain a molded product having high heat resistance.

$$CH_2=CH-Rf^1 \qquad (1)$$

(in the formula (1), $Rf^1$ is a $C_{1\text{-}10}$ polyfluoroalkyl group).

Here, the monomer reactivity ratio $r_{TFE}$ in copolymerization with TFE (hereinafter referred to as the "monomer reactivity ratio $r_{TFE}$") is a value obtained by dividing a rate constant in the reaction of propagating radicals with TFE by a rate constant in the reaction of the propagating radicals with the comonomer when the propagating radicals are repeating unit terminals derived from TFE. The lower the value, the higher the reactivity of the comonomer with TFE. The monomer reactivity ratio $r_{TFE}$ can be calculated by the Fineman-Ross formula by obtaining the composition of the polymer formed immediately after initiation of the copolymerization of TFE with the comonomer.

Specific examples of the highly reactive comonomer include $CH_2=CH\text{-}(CF_2)_2F$, $CH_2=CH\text{-}(CF_2)_4F$, $CH_2=CH\text{-}(CF_2)_6F$, perfluoro(2-methylene-4-methyl-1,3-dioxolane), $CF_2=CF\text{-}O\text{-}CF_3$, $CF_2=CF\text{-}O\text{-}CF_2CF_3$, $CF_2=CF\text{-}O\text{-}(CF_2)_nCF=CF_2$, perfluoro(5-methoxy-1,3-dioxole), perfluoro(2,2-dimethyl-1,3-dioxole), etc.

The highly reactive comonomer is preferably contained in the emulsion polymerization system so that it will be from 0.001 to 0.01 mass% to the final amount of PTFE produced.

With respect to the conditions for emulsion polymerization of TFE, the polymerization temperature is preferably from 10 to 95°C, more preferably from 15 to 90°C. The polymerization pressure is preferably from 0.5 to 4.0 MPa, more preferably from 0.6 to 3.5 MPa. The polymerization time is preferably from 90 to 520 minutes, more preferably from 90 to 450 minutes.

The PTFE emulsion obtainable by the emulsion polymerization of TFE has a PTFE concentration of preferably from 10 to 45 mass%, more preferably from 15 to 45 mass%, particularly preferably from 20 to 40 mass%.

The average particle size of primary particles of PTFE contained in the PTFE emulsion is preferably from 0.20 to 0.30 μm, more preferably from 0.21 to 0.27 μm, particularly preferably from 0.22 to 0.26 μm. If the average particle size of primary particles of PTFE is too small, it requires time and labor at the time of exerting a stirring shearing force to the PTFE emulsion to obtain a PTFE fine powder, and thus, the production efficiency tends to be low. On the other hand, if the average particle size of primary particles of PTFE is too large, the stability of the PTFE emulsion tends to be low, and the amount of coagulum increases during the emulsion polymerization of TFE, such being disadvantageous from the viewpoint of the production efficiency. Further, at the time of exerting a stirring shearing force to the PTFE emulsion to obtain a PTFE fine powder, a large amount of coagulum are likely to be formed thus leading to clogging of pipe lines or reduction of the yield. Here, the average particle size of primary particles of PTFE in the present invention is a value of a median diameter obtained by measuring primary particles of PTFE in the PTFE emulsion by means of a laser scattering particle size distribution analyzer.

Then, in step 2, the PTFE emulsion is coagulated and stirred, and a wet-state PTFE fine powder (hereinafter referred to as a non-dried PTFE fine powder) is separated from the aqueous medium.

In the present invention, the PTFE emulsion to be used for the coagulation and stirring (hereinafter referred to as the PTFE emulsion for coagulation) has a PTFE concentration of from 10 to 25 mass%. The PTFE concentration is preferably from 10 to 22 mass%, more preferably from 10 to 20 mass%. In order to increase the bulk density of the PTFE fine powder, the PTFE concentration in the PTFE emulsion for coagulation should better be high. When the PTFE concentration in the PTFE emulsion for coagulation is high, the association degree of primary particles of PTFE tends to be high, whereby primary particles of PTFE will be densely associated and coagulated and thus will be agglomerated. If the PTFE concentration in the PTFE emulsion for coagulation is less than 10 mass%, the coagulation density of primary particles of PTFE tends to be loose, and it tends to be difficult to obtain a PTFE fine powder having a high bulk density. On the other hand, if the PTFE concentration in the PTFE emulsion for coagulation is too high, non-coagulated PTFE increases, and the concentration of non-coagulated PTFE in the coagulation wastewater increases. If the concentration of non-coagulated PTFE in the coagulation wastewater is high, clogging of pipe lines is likely to occur, or labor and costs will be required for wastewater treatment. Further, the yield of the PTFE fine powder tends to be low. The concentration of non-coagulated PTFE in the coagulation wastewater is preferably low from the viewpoint of the productivity of the PTFE fine powder, more preferably less than 0.4 mass%, particularly preferably less than 0.3 mass%. If the PTFE concentration in the PTFE emulsion for coagulation exceeds 25 mass%, it becomes difficult to make the concentration of non-coagulated PTFE in the coagulation wastewater to be less than 0.4 mass%.

Here, the PTFE concentration in the PTFE emulsion obtainable in the above step 1 is from about 10 to 45 mass%, and therefore, in a case where the PTFE concentration is high, a diluting solvent such as water may be added to adjust the concentration to be from 10 to 25 mass%. Whereas, in a case where the PTFE concentration in the PTFE emulsion after the emulsion polymerization is from 10 to 25 mass%, the PTFE emulsion may be used, as it is, as a PTFE emulsion for coagulation.

The temperature for coagulating the PTFE emulsion for coagulation in the present invention is from 5 to 18°C. The coagulation temperature is preferably from 5 to 17°C, more preferably from 8 to 17°C. When the coagulation temperature is within such a range, non-coagulated PTFE will be less, and it is possible to reduce the concentration of non-coagulated PTFE in the coagulation wastewater. The reason for this phenomenon is considered to be such that when the coagulation temperature is low, the solubility of the fluorinated emulsifier is low, whereby the surface active performance which is considered to be linked with the solubility of the fluorinated emulsifier, will be low, and the amount of non-coagulated PTFE will decrease. If the coagulation temperature exceeds 18°C, it tends to be difficult to bring the concentration of non-coagulated PTFE in the coagulation wastewater to be less than 0.4 mass%. On the other hand, if it is less than 5°C, the particle size of the PTFE fine powder tends to be too small, whereby the handling efficiency tends to be impaired. Further, the cost to maintain the coagulation temperature to be low, tends to be high, and the industrial load increases.

In the present invention, to the PTFE emulsion for coagulation, a coagulant, such as nitric acid or its salt, ammonium carbonate, or ammonium hydrogencarbonate, may be added. However, if such a coagulant is used, the nitrogen concentration in the coagulation wastewater increases. From the viewpoint of regulations to restrict nitrogen discharge to the environment, it is preferred not to use a coagulant. According to the present invention, even without using a coagulant, it is possible to make the concentration of non-coagulated PTFE in the coagulation wastewater to be less than 0.4 mass%.

The method for coagulating and stirring the PTFE emulsion for coagulation is not particularly limited, and a conventional method may be employed. For example, a method may be mentioned wherein the PTFE emulsion is vigorously stirred to coagulate primary particles of PTFE and then further stirred at a proper speed, whereupon a PTFE fine powder having primary particles coagulated is separated, followed by steps of agglomeration and particle size regulation, to obtain a non-dried PTFE fine powder. In the present invention, a process wherein PTFE particles grow to a few 100 μm after the coagulation of the PTFE emulsion, is called agglomeration. Further, a process wherein the particle characteristics and the particle size distribution are regulated by further continuing the stirring, is called particle size regulation. The non-dried PTFE fine powder is carefully separated from the aqueous layer not to impart a damage or deformation to PTFE particles, for example, by a dehydration sieve.

Here, in the aqueous medium (the coagulation wastewater) after having non-dried PTFE fine powder separated, a fluorinated emulsifier is contained, but the fluorinated emulsifier contained in the coagulation wastewater can be recovered by e.g. a method for adsorbing it by means of an ion exchange resin, a concentration method such as evaporating water, or a method for adsorbing it on activated carbon.

Then, in step 3, the non-dried PTFE fine powder is dried to produce a PTFE fine powder.

The temperature for drying the non-dried PTFE fine powder is preferably from 110 to 250°C, more preferably from 120 to 230°C. If the drying temperature is lower than 110°C, not only it takes time for the drying, but also the drying is likely to be inadequate. If the drying temperature exceeds 250°C, there may be a case where the paste extrusion pressure properties cannot be improved.

The drying of the non-dried PTFE fine powder is carried out preferably in such a state that the non-dried PTFE fine powder will not flow as far as possible, preferably in a standing still state. At that time, it is also preferred to carry out the drying by means of e.g. vacuuming, radio-frequency radiation or hot air.

It is preferred to carry out the drying of the non-dried PTFE fine powder in an atmosphere containing ammonia. When the drying of the non-dried PTFE fine powder is carried out in an atmosphere containing ammonia, it is possible to lower the paste extrusion pressure of the PTFE fine powder without impairing the properties of PTFE. Here, an atmosphere containing ammonia is meant for an atmosphere wherein ammonia gas is in contact with the non-dried PTFE fine powder. For example, it is meant for an atmosphere wherein ammonia gas is present, or an atmosphere wherein ammonia or a compound capable of generating ammonia is dissolved in moisture contained in the non-dried PTFE fine powder, so that ammonia gas is generated by e.g. heating. The compound capable of generating ammonia may, for example, be an ammonium salt or urea, which will be decomposed to generate ammonia when heated.

As the ammonium salt, ammonium carbonate, ammonium hydrogencarbonate, etc. may be mentioned. Ammonium carbonate is particularly preferred. The solubility of ammonium carbonate is 55.8 g/100 g water (°C), which is higher than the solubility (24.8 g/100 g water (25°C)) of ammonium hydrogencarbonate, and therefore, when used in the form of an aqueous solution, it can be handled as a concentrated solution, and its precipitation due to a change in ambient temperature is less likely to occur, whereby the handling will be easy.

Whereas urea will not be decomposed into ammonia unless it is heated to about 130°C or higher. Therefore, in a case where the drying is carried out at a low temperature, it is preferred to carry out the drying in the presence of ammonia or an ammonium salt.

The amount of ammonia, an ammonium salt or urea to be used, is preferably from 0.1 to 10 parts by mass to 100 parts by mass of the PTFE fine powder after the drying. When the amount of ammonia, an ammonium salt or urea to be used, is at least 0.1 part by mass, the effects of the present invention are distinctly obtainable. If the amount exceeds 10 mass%, a countermeasure against the exhaust gas odor is required. It is more preferably from 0.1 to 7 parts by mass, particularly preferably from 0.1 to 5 parts by mass.

In a case where the non-dried PTFE fine powder has, adsorbed thereon, a fluorinated emulsifier which will evaporate or sublime during the drying, it is possible to recover the adsorbed fluorinated emulsifier by introducing the exhaust gas during the drying into, for example, an aqueous alkaline solution (e.g. a concentrated potassium carbonate aqueous solution).

The bulk density of the PTFE fine powder to be produced by the present invention is preferably at least 500 g/L, more preferably from 500 to 600 g/L, particularly preferably from 500 to 590 g/L. At the time of subjecting the PTFE fine powder to paste extrusion molding, the PTFE fine powder and a lubricant are mixed into a mixture, followed by preliminary molding. If the bulk density is less than 500 g/L, a prescribed amount of the mixture may not be put into the mold for the preliminary molding. Further, the uniformity of the mixture tends to be inadequate. On the other hand, if the bulk density exceeds 600 g/L, the extrudability tends to be unstable.

In the present invention, it is more preferred to adjust the PTFE concentration in the PTFE emulsion for coagulation to be high within a range of from 10 to 25 mass% and to adjust the coagulation temperature to be low within a range of from 5 to 18°C.

Here, in the present invention, the bulk density is a value measured by the method described in Examples given hereinafter.

The PTFE fine powder to be produced by the present invention has a standard specific gravity (hereinafter referred to as SSG) of preferably from 2.135 to 2.220, more preferably from 2.135 to 2.160, particularly preferably from 2.135 to 2.155. SSG is used as an index for a relative molecular weight, and generally, the lower the value, the higher the molecular weight. If SSG is too low, the stress relaxation time tends to be less than 500 seconds, such being undesirable. If SSG is too high, the molecular weight tends to be low, and the properties of PTFE tend to be low.

SSG of the PTFE fine powder tends to be low if a polymerization method for increasing the molecular weight is adopted, and it tends to be high if a polymerization method for not increasing the molecular weight is adopted.

Here, in the present invention, SSG of the PTFE fine powder is a value measured by a method described in Examples given hereinafter.

The average particle size of the PTFE fine powder to be produced by the present invention is preferably from 300 to 700 μm, more preferably from 350 to 600 μm. If it is less than 300 μm, the powder tends to be formed into nodules, and the adhesion to a container tends to be strong, whereby the handling efficiency tends to be impaired. If it exceeds 700 μm, uniform paste extrusion properties tend to be impaired.

Here, in the present invention, the average particle size of the PTFE fine powder is a value measured by a method described in Examples given hereinafter.

The PTFE fine powder may be formed into a desired molded product by subjecting it to paste extrusion molding.

A conventional method may be employed as a method for paste extrusion molding of the PTFE fine powder. For example, a method may be mentioned wherein the PTFE fine powder and a lubricant are mixed to impart flowability to the PTFE fine powder, followed by paste extrusion molding into a desired shape. The mixing proportion of the lubricant may suitably be selected so as to let the PTFE fine powder have flowability. For example, the lubricant is mixed in an amount of preferably from 15 to 30 parts by mass, more preferably from 20 to 25 parts by mass, to 100 parts by mass of the PTFE fine powder. As the lubricant, naphtha or a petroleum type hydrocarbon having a dry point of at least 100°C is preferred. Further, it is also possible to add an additive such as a pigment for coloration or various fillers to impart strength, electrical conductivity, etc.

As the shape of the paste extrusion molded product of the PTFE fine powder, various shapes such as a tube shape, a sheet shape, a film shape, a fiber shape, etc. may be employed. Further, the paste extrusion molded product of the PTFE fine powder may then be stretched to obtain a stretched porous product of PTFE. As the stretching conditions, a suitable rate, e.g. a rate of from 5 %/sec to 1,000 %/sec, and a suitable stretching ratio, e.g. a stretching ratio of at least 500%, may be employed. The porosity of the stretched porous product is not particularly limited, but the porosity is usually preferably within a range of from 50 to 99%, particularly preferably within a range of from 70 to 98%. As the shape of an article made of the stretched porous product, a tube shape, a sheet shape, a film shape or a fiber shape may, for example, be mentioned.

EXAMPLES

Now, the present invention will be described in detail with reference to Examples and Comparative Examples, but it should be understood that the present invention is by no means restricted by such Examples. Here, the properties of the PTFE fine powder were measured by the following methods.

(A) Average particle size (unit: μm) of primary particles of PTFE in PTFE emulsion

Median diameters were measured by means of a laser scattering particle size distribution analyzer (trade name "LA-920" manufactured by HORIBA, Ltd.), and an average particle size of primary particles of PTFE was obtained.

(B) Concentration (unit: mass %) of non-coagulated PTFE in coagulation wastewater

The PTFE emulsion was stirred for shearing and coagulated, and about 10 g of the coagulation wastewater was sampled, collected in a glass petri dish and dried at 120°C for two hours. Then, the mass of the residue was divided by the mass sampled in the glass petri dish to calculate the concentration of non-coagulated PTFE in the coagulation wastewater.

(C) Average particle size (unit: μm) of PTFE fine powder

Measured in accordance with JIS K6891. Sequentially from the top, 20, 30, 40, 45 and 60 mesh standard sieves were stacked, and the powder was put on the 20 mesh sieve and sieved, whereupon the mass of the PTFE fine powder remained in each sieve was obtained. Based on the mass, a 50% particle diameter was calculated by log probability paper and taken as the average particle size of the PTFE fine powder.

(D) Bulk density (unit: g/L) of PTFE fine powder

Measured in accordance with JIS K6891. Into a stainless steel measuring cup having an inner volume of 100 mL, a PTFE fine powder was dropped from a funnel disposed above, and the PTFE fine powder raised from the measuring cup was scraped off with a flat plate, whereupon the mass of the PTFE fine powder remained in the measuring cup was divided by the inner volume of the measuring cup to obtain a value, which was taken as the bulk density of the PTFE fine powder.

(E) SSG (standard specific gravity) of PTFE fine powder

Measured in accordance with ASTM D1457-91a, D4895-91a. 12.0 g of a PTFE fine powder was weighed and held for two minutes under 34.5 MPa in a cylindrical mold having an inner diameter of 28.6 mm. This was put in an oven of 290°C and heated at a rate of 120°C/hr. After being held at 380°C for 30 minutes, it was cooled at a rate of 60°C/hr and held at 294°C for 24 minutes. Then, it was held in a desiccator of 23°C for 12 hours, and then, the specific gravity value of the molded product to water at 23°C, was measured and taken as the standard specific gravity.

(F) Evaluation of properties of PTFE fine powder

100 g of a PTFE fine powder left to stand at room temperature for at least two hours, was put into a glass bottle having an internal capacity of 900 cc, and 21.7 g of a lubricant (trade name "Isopar H (registered trademark)", manufactured by Exxon) was added, followed by mixing for 3 minutes to obtain a PTFE mixture. The obtained PTFE mixture was left to stand for two hours in a 25°C constant temperature tank and then subjected to paste extrusion through an orifice having a diameter of 2.5 cm, a land length of 1.1 cm and an introduction angle of 30° at 25°C under conditions of a reduction ratio (a ratio of the cross-sectional area of the inlet to the cross-sectional area of the outlet of the die) of 100 and an extrusion rate of 51 cm/min., to obtain a bead. At that time, the pressure required for the extrusion was measured and taken as the extrusion pressure.
Then, the obtained bead was dried at 230°C for 30 minutes to remove the lubricant. And, the length of the bead was cut into a suitable length, and each end was fixed so that the clamp distance became 5.1 cm, followed by heating at 300°C in an air circulating furnace. Then, the bead was stretched under conditions of a stretching rate of 100%/sec. and a total stretching of 2,400% to prepare a sample for measuring the breaking strength test. And, this sample was fixed as pinched by movable jaws having a gauge length of 5.0 cm, whereupon the movable jaws were driven at a speed of 300 mm/min., whereby the breaking strength was measured at room temperature by means of a tensile tester (manufactured by A&D Company, Limited), and the smallest tensile breaking load (force) among three samples obtainable from the stretched bead i.e. one from each end of the stretched bead, (if a neck down is observed in the clamped range, such is extruded) and one from its center, was taken as the breaking strength.
Further, the above bead having the lubricant removed by heating was clamped by fixing each end so that the clamp distance would be 3.8 cm, and heated to 300°C in an air circulating furnace. And, the bead was stretched under conditions of a stretching rate of 1,000 %/sec. and a total stretching of 2,400%, to prepare a sample for measuring the stress relaxation time. This sample was fixed at its both ends by fixtures and spread to have an entire length of 25 cm. And, a time required for breaking when this sample was left in an oven at 390°C, was obtained, and the time was taken as the stress relaxation time.

EXAMPLE 1

Into a stainless steel autoclave having an inner volume of 100 L and equipped with baffle plates and a stirrer, 50 g of $C_2F_5OC_2F_4OCF_2COONH_4$ (ammonium perfluoro-3,6-dioxaoctanoate, hereinafter referred to "APFDO"), 750 g of paraffin wax, 9.0 g of succinic acid, 0.3 g of oxalic acid and 62 L of deionized water were charged. The autoclave was flushed with nitrogen and then depressurized, and 0.5 g of $CH_2=CH\text{-}(CF_2)_4F$ (hereinafter referred to as "PFBE") was charged. Then, the autoclave was pressurized with TFE, and the temperature was raised to 65°C with stirring. Then, the pressure was raised to 1.275 MPa with TFE, and a 0.04 mass% potassium permanganate aqueous solution was added at a rate of from 3.5 ml to 4.0 ml/min. 7.5 kg of TFE was added, then, addition of the potassium permanganate aqueous solution was terminated, and APFDO was additionally added. The inner temperature was raised to 90°C. Thereafter, TFE was added up to 22 kg, whereupon the reaction was terminated, and TFE in the autoclave was released to the atmospheric air. The polymerization time was 215 minutes. The obtained PTFE emulsion was cooled, and the supernatant paraffin wax was removed. The PTFE concentration in the PTFE emulsion was about 25 mass%. Further, the content of PFBE was about 0.002 mass% to the final yield of PTFE. Further, coagulum in the autoclave was at a level of a trace. And, the average particle size of primary particles of PTFE was 0.25 μm.
This PTFE emulsion was diluted with pure water to a PTFE concentration of 15 mass% to prepare a PTFE emulsion for coagulation. And, into a coagulation vessel having a capacity of 8L and equipped with stirring vanes, 7.3 kg of the PTFE emulsion for coagulation was charged and adjusted to 16°C, and then, 11.0 g of a 20 mass% ammonium carbonate aqueous solution (0.2 part by mass of ammonium carbonate to 100 parts by mass of PTFE) was put, followed coagulation at 427 rpm, whereupon a non-dried PTFE fine powder was separated. The concentration of non-coagulated PTFE in coagulation wastewater was 0.30 mass%.

Then, in a tray of 30 cm x 40 cm, 110 g of a 20 mass% ammonium carbonate aqueous solution was introduced, and the non-dried PTFE fine powder was uniformly put so that the layer height would be from 2 to 3 cm (2 parts by mass of ammonium carbonate to 100 parts by mass of PTFE). And, drying was carried out at 135°C for 12 hours in a high temperature air-circulation constant temperature drier (DRH453WA special model, manufactured by Toyo Engineering Works, Ltd., inner volume: 91 L) to produce a PTFE fine powder.

The obtained PTFE fine powder had an average particle size of 390 $\mu$m, a bulk density of 580 g/L and SSG of 2.142. Further, in accordance with the measuring method (F), a bead was obtained, whereby the extrusion pressure of the PTFE fine powder was 16.9 MPa. This bead was a uniform porous product free from fracture or formation of voids. Further, the breaking strength was 29.2 N, and the stress relaxation time was 550 seconds.

EXAMPLE 2

A non-dried PTFE fine powder was separated in the same manner as in Example 1 except that 7.3 kg of the PTFE emulsion for coagulation (PTFE concentration: 15 mass%) prepared in Example 1, was charged to a coagulation vessel having an inner volume of 8 L and equipped with stirring vanes, adjusted to 12°C, and coagulated at 427 rpm. The concentration of non-coagulated PTFE in coagulation wastewater was 0.20 mass%. And, in the same manner as in Example 1, the non-dried PTFE fine powder was dried to produce a PTFE fine powder.

The obtained PTFE fine powder had an average particle size of 400 $\mu$m and a bulk density of 550 g/L. Further, in accordance with the measuring method (F), a bead was obtained, whereby the extrusion pressure was 16.7 MPa. This bead was a uniform porous product free from fracture or formation of voids. Further, the breaking strength was 29.2 N, and the stress relaxation time was 509 seconds.

EXAMPLE 3

The PTFE emulsion prepared in Example 1 was diluted with pure water to a PTFE concentration of 17 mass% to prepare a PTFE emulsion for coagulation. And, into a coagulation vessel having an inner volume of 8 L and equipped with stirring vanes, 7.3 kg of the PTFE emulsion for coagulation was charged, adjusted to 10°C and then coagulated at 427 rpm, whereupon a non-dried PTFE fine powder was separated. The concentration of non-coagulated PTFE in coagulation wastewater was 0.18 mass%. And, in the same manner as in Example 1, the non-dried PTFE fine powder was dried to produce a PTFE fine powder.

The obtained PTFE fine powder had an average particle size of 380 $\mu$m and a bulk density of 570 g/L.

EXAMPLE 4

A non-dried PTFE fine powder was separated in the same manner as in Example 1 except that 7.3 kg of the PTFE emulsion for coagulation (PTFE concentration: 17 mass%) prepared in Example 3, was charged to a coagulation vessel having an inner volume of 8 L and equipped with stirring vanes, and adjusted to 14°C, and then, 12.4 g of a 20 mass% ammonium carbonate aqueous solution (0.2 part by mass of ammonium carbonate to 100 parts by mass of PTFE) was put, followed coagulation at 427 rpm. The concentration of non-coagulated PTFE in coagulation wastewater was 0.28 mass%. And, in the same manner as in Example 1, the non-dried PTFE fine powder was dried to produce a PTFE fine powder. The obtained PTFE fine powder had an average particle size of 380 $\mu$m and a bulk density of 560 g/L.

EXAMPLE 5

The PTFE emulsion prepared in Example 1 was diluted with pure water to a PTFE concentration of 13 mass% to prepare a PTFE emulsion for coagulation. And, into a coagulation vessel having an inner volume of 8 L and equipped with stirring vanes, 7.3 kg of the PTFE emulsion for coagulation was charged, adjusted to 14°C and then coagulated at 427 rpm, whereupon a non-dried PTFE fine powder was separated. The concentration of non-coagulated PTFE in coagulation wastewater was 0.34 mass%. And, in the same manner as in Example 1, the non-dried PTFE fine powder was dried to produce a PTFE fine powder.

The obtained PTFE fine powder had an average particle size of 460 $\mu$m and a bulk density of 520 g/L. Further, in accordance with the measuring method (F), a bead was obtained, whereby the extrusion pressure was 16.7 MPa. This bead was a uniform porous product free from fracture or formation of voids. Further, the breaking strength was 32.2 N, and the stress relaxation time was 587 seconds.

EXAMPLE 6

The PTFE emulsion prepared in Example 1 was diluted with pure water to a PTFE concentration of 10 mass% to prepare a PTFE emulsion for coagulation. And, into a coagulation vessel having an inner volume of 8 L and equipped with stirring vanes, 7.3 kg of the PTFE emulsion for coagulation was charged, adjusted to 17°C and then coagulated at 427 rpm, whereupon a non-dried PTFE fine powder was separated. The concentration of non-coagulated PTFE in coagulation wastewater was 0.30 mass%. And, in the same manner as in Example 1, the non-dried PTFE fine powder was dried to produce a PTFE fine powder.
The obtained PTFE fine powder had an average particle size of 530 $\mu$m and a bulk density of 510 g/L. Further, in accordance with the measuring method (F), a bead was obtained, whereby the extrusion pressure was 17.2 MPa. This bead was a uniform porous product free from fracture or formation of voids. Further, the breaking strength was 29.6 N, and the stress relaxation time was 577 seconds.

EXAMPLE 7

Into a stainless steel autoclave having an inner volume of 100 L and equipped with baffle plates and a stirrer, 63 g of APFDO, 670 g of paraffin wax and 60 L of deionized water were charged. The autoclave was flushed with nitrogen and then depressurized. Then, the autoclave was pressurized with TFE, and the temperature was raised to 70°C with stirring. Then, the pressure was raised to 1.765 MPa with TFE, and 5.0 g of disuccinic acid peroxide (concentration: 80 mass%, the rest being water) was dissolved and injected. In about 3 minutes, the inner pressure decreased to 1.78 MPa. While adding TFE so as to maintain the inner pressure of the autoclave at 1.80 MPa, polymerization was proceeded. APFDO was dissolved in warm water and added during the polymerization in a total amount of 125 g as APEDO. Further, ammonium sulfite was dissolved in water and added during the polymerization in a total amount of 4 g as ammonium sulfite. The temperature was lowered to 64°C on the way and raised to 80°C in the latter half of the polymerization. When the added amount of TFE reached 26 kg, the reaction was terminated, and TFE in the autoclave was released to the atmospheric air. The polymerization time was 183 minutes. The obtained PTFE emulsion was cooled, and the supernatant paraffin wax was removed. The PTFE concentration in the PTFE emulsion was about 28 mass%. Further, the average particle size of primary particles of PTFE was 0.33 $\mu$m. Further, coagulum in the reactor was at a level of a trace.
This PTFE emulsion was diluted with pure water to a PTFE concentration of 10 mass% to prepare a PTFE emulsion for coagulation. And, into a coagulation vessel having a capacity of 8L and equipped with stirring vanes, 7.3 kg of the PTFE emulsion for coagulation was charged, adjusted to 18°C, and then, coagulated at 427 rpm, to produce a non-dried PTFE fine powder. The concentration of non-coagulated PTFE in coagulation wastewater was 0.14 mass%.
Then, in a tray of 30 cm x 40 cm, 110 g of a 20 mass% ammonium carbonate aqueous solution was introduced, and the non-dried PTFE fine powder was uniformly put so that the layer height would be from 2 to 3 cm (2 parts by mass of ammonium carbonate to 100 parts by mass of PTFE). And, drying was carried out at 180°C in a high temperature air-circulation constant temperature drier (DRH453WA special model, manufactured by Toyo Engineering Works, Ltd., inner volume: 91 L) to obtain a PTFE fine powder.
The obtained PTFE fine powder had an average particle size of 500 $\mu$m, a bulk density of 500 g/L and SSG of 2.151. Further, in accordance with the measuring method (F), a bead was obtained, whereby the extrusion pressure was 16.9 MPa. This bead was a uniform porous product free from fracture or formation of voids. Further, the breaking strength was 24.3 N, and the stress relaxation time was 634 seconds.

EXAMPLE 8

The PTFE emulsion prepared in Example 7 was diluted with pure water to a PTFE concentration of 13 mass% to prepare a PTFE emulsion for coagulation. And, into a coagulation vessel having an inner volume of 8 L and equipped with stirring vanes, 7.3 kg of the PTFE emulsion for coagulation was charged, adjusted to 14°C and then coagulated at 427 rpm, whereupon a non-dried PTFE fine powder was separated. The concentration of non-coagulated PTFE in coagulation wastewater was 0.15 mass%. And, in the same manner as in Example 7, the non-dried PTFE fine powder was dried to produce a PTFE fine powder.
The obtained PTFE fine powder had an average particle size of 460 $\mu$m and a bulk density of 520 g/L. Further, in accordance with the measuring method (F), a bead was obtained, whereby the extrusion pressure was 17.6 MPa. This bead was a uniform porous product free from fracture or formation of voids. Further, the breaking strength was 25.1 N, and the stress relaxation time was 683 seconds.

EXAMPLE 9

The PTFE emulsion prepared in Example 7 was diluted with pure water to a PTFE concentration of 17 mass% to prepare a PTFE emulsion for coagulation. And, into a coagulation vessel having an inner volume of 8 L and equipped with stirring vanes, 7.3 kg of the PTFE emulsion for coagulation was charged, adjusted to 11 °C and then coagulated at 427 rpm, whereupon a non-dried PTFE fine powder was separated. The concentration of non-coagulated PTFE in coagulation wastewater was 0.10 mass%. And, in the same manner as in Example 7, the non-dried PTFE fine powder was dried to produce a PTFE fine powder.

The obtained PTFE fine powder had an average particle size of 390 $\mu$m and a bulk density of 540 g/L. Further, in accordance with the measuring method (F), a bead was obtained, whereby the extrusion pressure was 17.2 MPa. This bead was a uniform porous product free from fracture or formation of voids. Further, the breaking strength was 23.5 N, and the stress relaxation time was 628 seconds.

EXAMPLE 10

The PTFE emulsion prepared in Example 7 was diluted with pure water to a PTFE concentration of 21 mass% to prepare a PTFE emulsion for coagulation. And, into a coagulation vessel having an inner volume of 8 L and equipped with stirring vanes, 7.3 kg of the PTFE emulsion for coagulation was charged, adjusted to 9°C and then coagulated at 427 rpm, whereupon a non-dried PTFE fine powder was separated. The concentration of non-coagulated PTFE in coagulation wastewater was 0.16 mass%. And, in the same manner as in Example 7, the non-dried PTFE fine powder was dried to produce a PTFE fine powder.

The obtained PTFE fine powder had an average particle size of 380 $\mu$m and a bulk density of 600 g/L. Further, in accordance with the measuring method (F), a bead was obtained, whereby the extrusion pressure was 17.1 MPa. This bead was a uniform porous product free from fracture or formation of voids. Further, the breaking strength was 23.5 N, and the stress relaxation time was 611 seconds.

COMPARATIVE EXAMPLE 1

A non-dried PTFE fine powder was separated in the same manner as in Example 1 except that 7.3 kg of the PTFE emulsion for coagulation (PTFE concentration: 15 mass%) prepared in Example 1, was charged to a coagulation vessel having an inner volume of 8 L and equipped with stirring vanes, adjusted to 20°C, and coagulated at 427 rpm. The concentration of non-coagulated PTFE in coagulation wastewater was 1.31 mass%. And, in the same manner as in Example 1, the non-dried PTFE fine powder was dried to produce a PTFE fine powder.

The obtained PTFE fine powder had an average particle size of 510 $\mu$m and a bulk density of 550 g/L. Further, in accordance with the measuring method (F), a bead was obtained, whereby the extrusion pressure was 16.7 MPa. This bead was a uniform porous product free from fracture or formation of voids. Further, the breaking strength was 28.8 N, and the stress relaxation time was 549 seconds.

COMPARATIVE EXAMPLE 2

A non-dried PTFE fine powder was separated in the same manner as in Example 1 except that 7.3 kg of the PTFE emulsion for coagulation (PTFE concentration: 10 mass%) prepared in Example 6, was charged to a coagulation vessel having an inner volume of 8 L and equipped with stirring vanes, adjusted to 20°C, and coagulated at 427 rpm. The concentration of non-coagulated PTFE in coagulation wastewater was 1.18 mass%. And, in the same manner as in Example 1, the non-dried PTFE fine powder was dried to produce a PTFE fine powder.

The obtained PTFE fine powder had an average particle size of 580 $\mu$m and a bulk density of 500 g/L. Further, in accordance with the measuring method (F), a bead was obtained, whereby the extrusion pressure was 16.7 MPa. This bead was a uniform porous product free from fracture or formation of voids. Further, the breaking strength was 31.0 N, and the stress relaxation time was 616 seconds.

COMPARATIVE EXAMPLE 3

The PTFE emulsion prepared in Example 1 was diluted with pure water to a PTFE concentration of 8 mass% to prepare a PTFE emulsion for coagulation. And, 7.3 kg of the PTFE emulsion for coagulation was charged to a coagulation vessel having an inner volume of 8 L and equipped with stirring vanes, adjusted to 20°C, and coagulated at 427 rpm, whereupon a non-dried PTFE fine powder was separated. The concentration of non-coagulated PTFE in coagulation wastewater was 0.68 mass%. And, in the same manner as in Example 1, the non-dried PTFE fine powder was dried to produce a PTFE fine powder.

The obtained PTFE fine powder had an average particle size of 580 μm and a bulk density of 490 g/L.

The above results are summarized in Tables 1 to 3.

TABLE 1

|  | Ex. 1 | Ex. 2 | Ex. 3 | Ex. 4 | Ex. 5 | Ex. 6 |
|---|---|---|---|---|---|---|
| PTFE concentration (mass%) in PTFE emulsion for coagulation | 15 | 15 | 17 | 17 | 13 | 10 |
| Coagulation temperature (°C) | 16 | 12 | 10 | 14 | 14 | 17 |
| Use of coagulant during coagulation and stirring | Yes * | No | No | Yes * | No | No |
| Concentration (mass%) of non-coagulated PTFE in coagulation wastewater | 0.30 | 0.20 | 0.18 | 0.28 | 0.34 | 0.30 |
| Average particle size (μm)of PTFE fine powder | 390 | 400 | 380 | 380 | 460 | 530 |
| Bulk density (g/L) of PTFE fine powder | 580 | 550 | 570 | 560 | 520 | 510 |
| SSG of PTFE fine powder | 2.142 | | | | | |
| Extrusion pressure (MPa) | 16.9 | 16.7 | - | - | 16.7 | 17.2 |
| Breaking strength (N) | 29.2 | 29.2 | - | - | 32.2 | 29.6 |
| Stress relaxation time (sec.) | 550 | 509 | - | - | 587 | 577 |
| * Ammonium carbonate was used in an amount of 0.2 part by mass to 100 parts by mass of PTFE | | | | | | |

TABLE 2

|  | Ex. 7 | Ex. 8 | Ex. 9 | Ex. 10 |
|---|---|---|---|---|
| PTFE concentration (mass%) in PTFE emulsion for coagulation | 10 | 13 | 17 | 21 |
| Coagulation temperature (°C) | 18 | 14 | 11 | 9 |
| Use of coagulant during coagulation and stirring | No | No | No | No |
| Concentration (mass%) of non-coagulated PTFE in coagulation wastewater | 0.14 | 0.15 | 0.10 | 0.16 |
| Average particle size (μm)of PTFE fine powder | 500 | 460 | 390 | 380 |
| Bulk density (g/L) of PTFE fine powder | 500 | 520 | 540 | 600 |
| SSG of PTFE fine powder | 2.151 | | | |
| Extrusion pressure (MPa) | 16.9 | 17.6 | 17.2 | 17.1 |
| Breaking strength (N) | 24.3 | 25.1 | 23.5 | 23.5 |
| Stress relaxation time (sec.) | 634 | 683 | 628 | 611 |

TABLE 3

|  | Comp. Ex. 1 | Comp. Ex. 2 | Comp. Ex. 3 |
|---|---|---|---|
| PTFE concentration (mass%) in PTFE emulsion for coagulation | 15 | 10 | 8 |
| Coagulation temperature (°C) | 20 | 20 | 20 |
| Use of coagulant during coagulation and stirring | No | No | No |
| Concentration (mass%) of non-coagulated PTFE in coagulation wastewater | 1.31 | 1.18 | 0.68 |
| Average particle size (μm)of PTFE fine powder | 510 | 580 | 580 |
| Bulk density (g/L) of PTFE fine powder | 550 | 500 | 490 |
| SSG of PTFE fine powder | 2.142 | | |

(continued)

|  | Comp. Ex. 1 | Comp. Ex. 2 | Comp. Ex. 3 |
|---|---|---|---|
| Extrusion pressure (MPa) | 16.7 | 16.7 | - |
| Breaking strength (N) | 28.8 | 31.0 | - |
| Stress relaxation time (sec.) | 549 | 616 | - |

As is evident from the above results, by coagulating and stirring a PTFE emulsion for coagulation having a PTFE concentration of from 10 to 25 mass%, at a coagulation temperature of from 5 to 18°C, it was possible to produce a PTFE fine powder having a bulk density of 500 g/L or higher. Further, it was possible to reduce the concentration of non-coagulated PTFE in coagulation wastewater to 0.4 mass% or lower.

Whereas, in Comparative Examples 1 to 3 wherein the coagulation temperature exceeded 18°C, the concentration of non-coagulated PTFE in coagulation wastewater was high at a level exceeding 0.4 mass%.

INDUSTRIAL APPLICABILITY

The PTFE fine powder produced by the process of the present invention has a high bulk density and is widely useful for the production of tubes with various diameters, raw tapes, porous films, sheets, etc.

Further, it is suitable also for applications such as electric wire coatings, porous membranes, filters, sliding materials, sealing materials, etc.

The entire disclosure of Japanese Patent Application No. 2012-020530 filed on February 2, 2012 including specification, claims, drawings and summary is incorporated herein by reference in its entirety.

**Claims**

1.    A process for producing a polytetrafluoroethylene fine powder, which comprises
emulsion-polymerizing tetrafluoroethylene in the presence of an aqueous medium, at least one fluorinated emulsifier selected from the group consisting of a $C_{4-7}$ fluorinated carboxylic acid having from 1 to 4 etheric oxygen atoms in its main chain, and its salts, and a radical polymerization initiator, to produce a polytetrafluoroethylene emulsion, adjusting the obtained polytetrafluoroethylene emulsion to a polytetrafluoroethylene concentration of from 10 to 25 mass%, followed by coagulation and stirring at a coagulation temperature of from 5 to 18°C to separate a wet-state polytetrafluoroethylene fine powder, and
drying the obtained wet-state polytetrafluoroethylene fine powder to produce a polytetrafluoroethylene fine powder.

2.    The process for producing a polytetrafluoroethylene fine powder according to Claim 1, wherein the coagulation and stirring of the polytetrafluoroethylene emulsion is carried out without using a coagulant.

3.    The process for producing a polytetrafluoroethylene fine powder according to Claim 1 or 2, wherein the bulk density of the polytetrafluoroethylene fine powder is at least 500 g/L.

4.    The process for producing a polytetrafluoroethylene fine powder according to any one of Claims 1 to 3, wherein the standard specific gravity of the polytetrafluoroethylene fine powder is from 2.135 to 2.220.

5.    The process for producing a polytetrafluoroethylene fine powder according to any one of Claims 1 to 4, wherein the emulsion polymerization of tetrafluoroethylene is conducted under emulsion polymerization conditions of a polymerization temperature of from 10 to 95°C, a polymerization pressure of from 0.5 to 4.0 MPa and a polymerization time of from 90 to 520 min., to produce the polytetrafluoroethylene emulsion.

6.    The process for producing a polytetrafluoroethylene fine powder according to any one of Claims 1 to 5, wherein the concentration of non-coagulated polytetrafluoroethylene in coagulation wastewater having the wet-state polytetrafluoroethylene fine powder separated by the coagulation and stirring, is less than 0.4 mass%.

7.    The process for producing a polytetrafluoroethylene fine powder according to any one of Claims 1 to 6, wherein the fluorinated emulsifier is $CF_3O(CF_2)_3OCHFCF_2COONH_4$, $CF_3OCF(CF_3)CF_2OCF(CF_3)COONH_4$, $C_3F_7OCF(CF_3)COONH_4$ or $C_2F_5OCF_2CF_2OCF_2COONH_4$.

**8.** The process for producing a polytetrafluoroethylene fine powder according to any one of Claims 1 to 7, wherein the amount of the fluorinated emulsifier used, is from 1,500 to 20,000 ppm to the yield of polytetrafluoroethylene.

**9.** The process for producing a polytetrafluoroethylene fine powder according to any one of Claims 1 to 8, wherein the drying of the wet-state polytetrafluoroethylene fine powder is carried out in an atmosphere containing ammonia.

**Patentansprüche**

**1.** Verfahren zur Herstellung eines Polytetrafluorethylen-Feinpulvers, welches
Emulsionspolymerisieren von Tetrafluorethylen in Gegenwart eines wässrigen Mediums, mindestens eines fluorierten Emulgators ausgewählt aus der Gruppe, bestehend aus einer $C_{4-7}$-fluorierten Carbonsäure mit 1 bis 4 etherischen Sauerstoffatomen in ihrer Hauptkette und deren Salze, und eines radikalischen Polymerisationsstarter zum Herstellen einer Polytetrafluorethylen-Emulsion,
Einstellen der erhaltenen Polytetrafluorethylen-Emulsion auf eine Polytetrafluorethylen-Konzentration von 10 bis 25 Massen-%, gefolgt von einer Koagulation und Rühren bei einer Koagulationstemperatur von 5 bis 18°C zum Abtrennen eines Polytetrafluorethylen-Feinpulvers im Naßzustand und
Trocknen des erhaltenen Polytetrafluorethylen-Feinpulvers im Naßzustand zum Herstellen eines Polytetrafluorethylen-Feinpulvers umfaßt.

**2.** Verfahren zur Herstellung eines Polytetrafluorethylen-Feinpulvers nach Anspruch 1, wobei die Koagulation und das Rühren der Polytetrafluorethylen-Emulsion ohne Verwendung eines Koagulans ausgeführt wird.

**3.** Verfahren zur Herstellung eines Polytetrafluorethylen-Feinpulvers nach Anspruch 1 oder 2, wobei die Schüttdichte des Polytetrafluorethylen-Feinpulvers mindestens 500 g/L beträgt.

**4.** Verfahren zur Herstellung eines Polytetrafluorethylen-Feinpulvers nach einem der Ansprüche 1 bis 3, wobei die Standard-Dichtezahl des Polytetrafluorethylen-Feinpulvers 2,135 bis 2,220 beträgt.

**5.** Verfahren zur Herstellung eines Polytetrafluorethylen-Feinpulvers nach einem der Ansprüche 1 bis 4, wobei die Emulsionspolymerisation von Tetrafluorethylen unter Emulsionspolymerisationsbedingungen bei einer Polymerisationstemperatur von 10 bis 95°C, einem Polymerisationsdruck von 0,5 bis 4,0 MPa und einer Polymerisationszeit von 90 bis 520 min zum Herstellen der Polytetrafluorethylen-Emulsion durchgeführt wird.

**6.** Verfahren zur Herstellung eines Polytetrafluorethylen-Feinpulvers nach einem der Ansprüche 1 bis 5, wobei die Konzentration des nicht-koagulierten Polytetrafluorethylens im Koagulationsabwasser, welches das durch Koagulation und Rühren abgetrennte Polytetrafluorethylen/Feinpulver im Naßzustand aufweist, weniger als 0,4 Masse-% beträgt.

**7.** Verfahren zur Herstellung eines Polytetrafluorethylen-Feinpulvers nach einem der Ansprüche 1 bis 6, wobei der fluorierte Emulgator $CF_3O(CF_2)_3OCHFCF_2COONH_4$, $CF_3OCF(CF_3)CF_2OCF(CF_3)COONH_4$, $C_3F_7OCF(CF_3)COONH_4$ oder $C_2F_5OCF_2CF_2OCF_2COONH_4$ ist.

**8.** Verfahren zur Herstellung eines Polytetrafluorethylen-Feinpulvers nach einem der Ansprüche 1 bis 7, wobei die Menge des verwendeten fluorierten Emulgators von 1500 bis 20 000 ppm, bezogen auf die Ausbeute von Polytetrafluorethylen, beträgt.

**9.** Verfahren zur Herstellung eines Polytetrafluorethylen-Feinpulvers nach einem der Ansprüche 1 bis 8, wobei das Trocknen des Polytetrafluorethylen-Feinpulvers im Naßzustand in einer Ammoniak enthaltenden Atmosphäre ausgeführt wird.

**Revendications**

**1.** Procédé pour produire une poudre fine de polytétrafluoroéthylène, qui comprend
la polymérisation en émulsion de tétrafluoroéthylène en présence d'un milieu aqueux, d'au moins un émulsionnant fluoré choisi dans l'ensemble constitué par les acides carboxyliques fluorés en $C_4$ à $C_7$ possédant 1 à 4 atome(s) d'oxygène d'éther dans leur chaîne principale, et leurs sels, et d'un amorceur de polymérisation radicalaire, pour produire une émulsion de polytétrafluoroéthylène,

l'ajustement de l'émulsion de polytétrafluoroéthylène obtenue à une concentration de polytétrafluoroéthylène de 10 à 25 % en masse, suivi d'une coagulation et d'une agitation à une température de coagulation de 5 à 18°C pour séparer une poudre fine de polytétrafluoroéthylène à l'état humide, et

le séchage de la poudre fine de polytétrafluoroéthylène à l'état humide obtenue pour produire une poudre fine de polytétrafluoroéthylène.

2.  Procédé pour produire une poudre fine de polytétrafluoroéthylène selon la revendication 1, dans lequel la coagulation et l'agitation de l'émulsion de polytétrafluoroéthylène sont effectuées sans utilisation d'un coagulant.

3.  Procédé pour produire une poudre fine de polytétrafluoroéthylène selon la revendication 1 ou 2, dans lequel la masse volumique apparente de la poudre fine de polytétrafluoroéthylène est d'au moins 500 g/l.

4.  Procédé pour produire une poudre fine de polytétrafluoroéthylène selon l'une quelconque des revendications 1 à 3, dans lequel la densité standard de la poudre fine de polytétrafluoroéthylène est de 2,135 à 2,220.

5.  Procédé pour produire une poudre fine de polytétrafluoroéthylène selon l'une quelconque des revendications 1 à 4, dans lequel la polymérisation en émulsion du tétrafluoroéthylène est effectuée dans des conditions de polymérisation en émulsion comprenant une température de polymérisation de 10 à 95°C, une pression de polymérisation de 0,5 à 4,0 MPa et un temps de polymérisation de 90 à 520 minutes, pour produire l'émulsion de polytétrafluoroéthylène.

6.  Procédé pour produire une poudre fine de polytétrafluoroéthylène selon l'une quelconque des revendications 1 à 5, dans lequel la concentration de polytétrafluoroéthylène non coagulé dans les eaux usées de coagulation comprenant la poudre fine de polytétrafluoroéthylène à l'état humide séparée par coagulation et agitation, est inférieure à 0,4 % en masse.

7.  Procédé pour produire une poudre fine de polytétrafluoroéthylène selon l'une quelconque des revendications 1 à 6, dans lequel l'émulsionnant fluoré est $CF_3O(CF_2)_3OCHFCF_2COONH_4$, $CF_3OCF(CF_3)CF_2OCF(CF_3)COONH_4$, $C_3F_7OCF(CF_3)COONH_4$ ou $C_2F_5OCF_2CF_2OCF_2COONH_4$.

8.  Procédé pour produire une poudre fine de polytétrafluoroéthylène selon l'une quelconque des revendications 1 à 7, dans lequel la quantité de l'émulsionnant fluoré utilisé est de 1500 à 20000 ppm par rapport au rendement en polytétrafluoroéthylène.

9.  Procédé pour produire une poudre fine de polytétrafluoroéthylène selon l'une quelconque des revendications 1 à 8, dans lequel le séchage de la poudre fine de polytétrafluoroéthylène à l'état humide est effectué dans une atmosphère contenant de l'ammoniac.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005042593 A
- US 200700142541 A
- US 20080269408 A

- JP 2010037365 A
- JP 2012020530 A